# FASCICULE DE BREVET EUROPEEN

(11) **EP 1 770 321 B1**
(45) Date de publication et mention de la délivrance du brevet: **27.02.2008**
(21) Numéro de dépôt: 06291507.9
(22) Date de dépôt: 26.09.2006
(51) Int. Cl.: F16L 37/088, F16L 37/14

(54) **Raccord encliquetable entre un conduit de fluide et un embout tubulaire rigide**
Rastverbindung zwischen einer Rohrleitung und einem starren Rohrende
Snap coupling between a fluid conduit and a rigid pipe end

(30) Priorité: 29.09.2005 FR 0509934
(43) Date de publication de la demande: 04.04.2007
(73) Titulaire: Hutchinson, 75008 Paris (FR)
(72) Inventeur: Milanini, Luc, 45200 Montargis (FR); Chaumeron, Benjamin, 45200 Montargis (FR)
(74) Mandataire: Bolinches, Michel Jean-Marie

(56) Documents cités:
- EP-A- 0 862 009
- EP-A- 0 940 620
- EP-A- 1 559 945
- FR-A- 2 795 156
- US-A- 3 753 582
- US-A- 4 895 396

## Description

L'invention concerne un raccord encliquetable entre un conduit de fluide et un embout tubulaire rigide, en particulier pour un circuit d'alimentation en carburant ou pour un circuit d'assistance au freinage d'un véhicule à moteur thermique.

Un raccord encliquetable entre un conduit de fluide et un embout tubulaire rigide est notamment décrit dans le document FR-2 795 156 au nom de la demanderesse. Ce raccord comprend notamment une douille montée fixement sur une extrémité du conduit, et l'embout tubulaire rigide, destiné à être introduit dans la douille, comporte une saillie périphérique au voisinage de son extrémité libre. Le raccord est complété par un organe de verrouillage en forme de cavalier ou d'épingle destiné à chevaucher la douille et qui présente deux pattes élastiquement déformables aptes à s'engager dans deux ouvertures de la douille afin de coopérer avec la saillie périphérique de l'embout pour retenir ce dernier dans la douille. Pour faciliter la connexion, l'organe de verrouillage est pré-monté sur la douille, et on engage ensuite l'embout tubulaire dans la douille. Cet engagement entraîne un écartement des deux pattes élastiques de l'organe de verrouillage au passage de la saillie périphérique de l'embout, les deux pattes élastiques reprenant normalement leurs positions initiales après le passage de la saillie pour retenir l'embout dans la douille.

L'opérateur qui effectue le montage peut être assuré d'une bonne connexion lorsque les deux pattes élastiques reviennent dans leurs positions initiales après le passage de la saillie périphérique de l'embout, car cela se traduit par l'émission d'un bruit caractéristique que l'opérateur peut percevoir. Cependant, ce témoin sonore de bonne connexion n'est pas forcément perçu par l'opérateur qui peut travailler dans un environnement hostile avec présence d'un bruit de fond.

Le document US-A-4 895 396 divulgue un raccord encliquetable selon le préambule de la revendication 1.

Un but de l'invention est de concevoir un raccord encliquetable du type de celui décrit dans le document FR-2 795 156 précité, mais qui est équipé d'un dispositif témoin visuel pour s'assurer de la bonne connexion entre l'embout et le raccord pour s'affranchir notamment des contraintes de bruit dans l'environnement où un opérateur procède au montage.

A cet effet, l'invention propose un raccord encliquetable comprenant un corps en forme de douille monté fixement, via un dispositif de retenue, sur une extrémité d'un conduit à raccorder sur un embout tubulaire rigide qui est destiné à être introduit dans la douille et qui comporte une saillie périphérique au voisinage de son extrémité libre, un organe de verrouillage destiné à coopérer avec la saillie périphérique de l'embout pour retenir ce dernier dans la douille, et un dispositif témoin visuel pour marquer la bonne connexion de l'embout dans la douille, le dispositif témoin étant supporté par la douille, placé derrière l'organe de verrouillage en considérant la direction d'engagement de l'embout dans la douille, et destiné à coopérer avec la saillie périphérique de l'embout pour passer d'une première position ou position basse en ne faisant pas saillie hors de la douille à une seconde position ou position haute en faisant saillie par rapport à la douille pour marquer visuellement une bonne connexion de l'embout dans la douille.

Selon l'invention, ce raccord encliquetable est tel que l'organe de verrouillage et le dispositif témoin sont constitués par deux épingles ou cavaliers présentant chacun une tête et deux pattes élastiquement déformables, est tel que chaque patte du dispositif témoin présente un crochet de fixation interne à son extrémité libre, et que les crochets de fixation des pattes du dispositif témoin coopèrent avec deux crans inférieurs ménagés sur la douille lorsque le dispositif témoin est dans sa position basse, et avec deux crans intermédiaires ménagés sur la douille lorsque le dispositif témoin est dans sa position haute.

Selon une autre caractéristique de l'invention, ce dispositif témoin peut être ramené dans sa position basse après être passé dans sa position haute marquant la bonne connexion de l'embout dans la douille, ce qui permet de réduire l'encombrement du raccord.

Selon une autre caractéristique de l'invention, l'organe de verrouillage et le dispositif témoin sont accolés l'un à l'autre dans la douille.

Selon un mode de réalisation, chaque patte du dispositif témoin présente sur sa face avant, en considérant la direction d'engagement de l'embout dans la douille, une surface d'appui inclinée apte à coopérer avec la saillie périphérique de l'embout pour faire passer le dispositif témoin de sa position basse à sa position haute.

Le dispositif témoin de la bonne connexion entre l'embout et la douille du raccord est peu encombrant car il n'augmente pratiquement pas la longueur axiale du raccord, son effort d'actionnement est indépendant de l'effort pour établir la connexion, et son actionnement est non destructif puisqu'il peut être réamorcé ou replacé dans sa position basse en exerçant une pression sur sa tête pour réduire l'encombrement du raccord.

D'autres caractéristiques, avantages et détails de l'invention ressortiront du complément de description qui va suivre en référence à des dessins annexés, donnés uniquement à titre d'exemple et dans lesquels :
la figure 1 est une vue en perspective d'un raccord encliquetable entre un conduit et un embout tubulaire rigide, avant que l'opération de connexion ne soit effectuée, ce raccord étant équipé d'un organe de verrouillage et d'un dispositif témoin de bonne connexion entre l'embout et le raccord ;

- la figure 2 est une vue en coupe longitudinale de la figure 1;
- la figure 3 est une vue en perspective de la douille seule formant le corps du raccord encliquetable de la figure 1 ;
- la figure 4 est une vue en perspective éclatée de l'organe de verrouillage et du dispositif témoin ;
- la figure 5 est une vue en perspective pour illustrer le montage de l'organe de verrouillage et du dispositif témoin dans la douille du raccord encliquetable ;
- la figure 6 est une vue en perspective du raccord encliquetable après l'opération de connexion entre le conduit et l'embout ; et
- la figure 7 est une vue en coupe longitudinale de la figure 6.

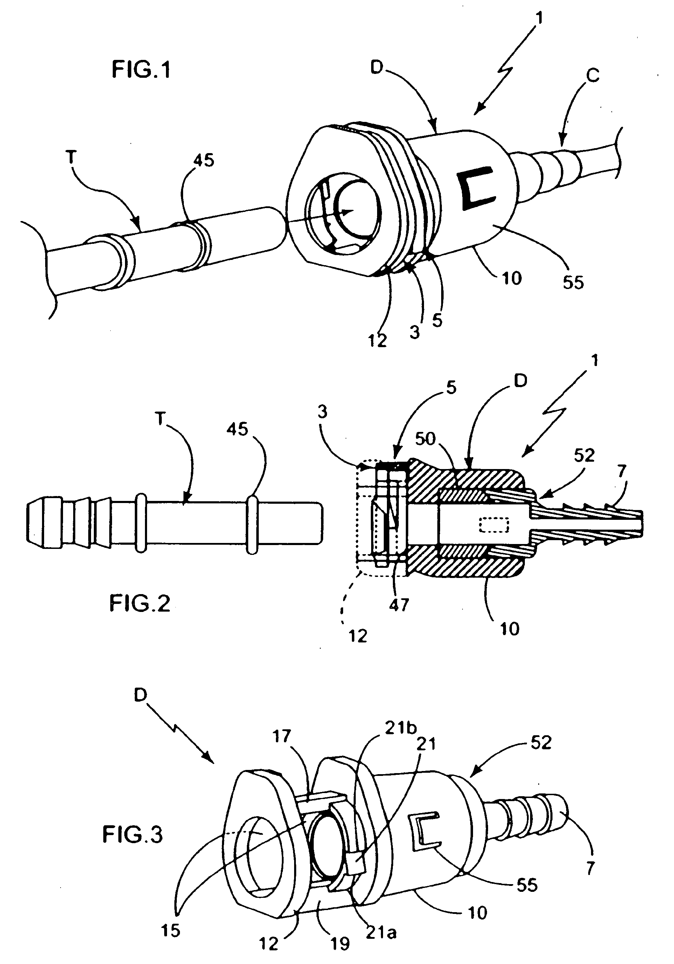

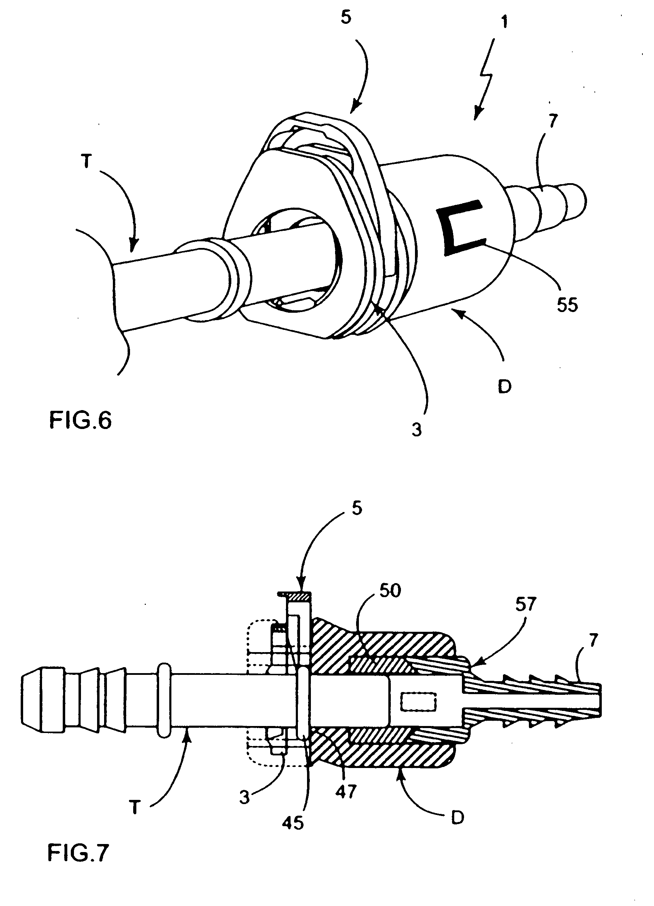

Le raccord encliquetable 1 tel qu'illustré aux figures 1 et 2 entre un conduit de fluide C et un embout tubulaire T, comprend un corps en forme de douille D monté fixement via un dispositif de retenue sur une extrémité du conduit C, un organe de verrouillage 3 de l'embout T dans la douille D, et un dispositif témoin visuel 5 de la bonne connexion entre l'embout T et la douille D (figures 6 et 7). Le conduit C est généralement souple et se raccorde de manière étanche par un emmanchement à force de son extrémité sur une queue de sapin 7 par exemple qui prolonge une extrémité de la douille D, cette queue de sapin constituant le dispositif de retenue précité.

La douille D (figure 3) présente une partie centrale 10 de forme cylindrique, et une partie d'extrémité 12, opposée à celle raccordée au conduit C, qui est séparée de la partie centrale 10 par deux ouvertures 15 diamétralement opposées. Les deux ouvertures 15 délimitent entre elles deux pontets 17 et 19 qui relient les deux parties centrale 10 et d'extrémité 12 de la douille D. Du côté adjacent à la partie centrale 10 de la douille D, les deux pontets 17 et 19 sont reliés l'un à l'autre par deux arcs de matière arqués 21 dont la paroi externe de chacun présente deux crans d'arrêt inférieur 21 a et intermédiaire 21 b dont les fonctions seront explicitées plus loin.

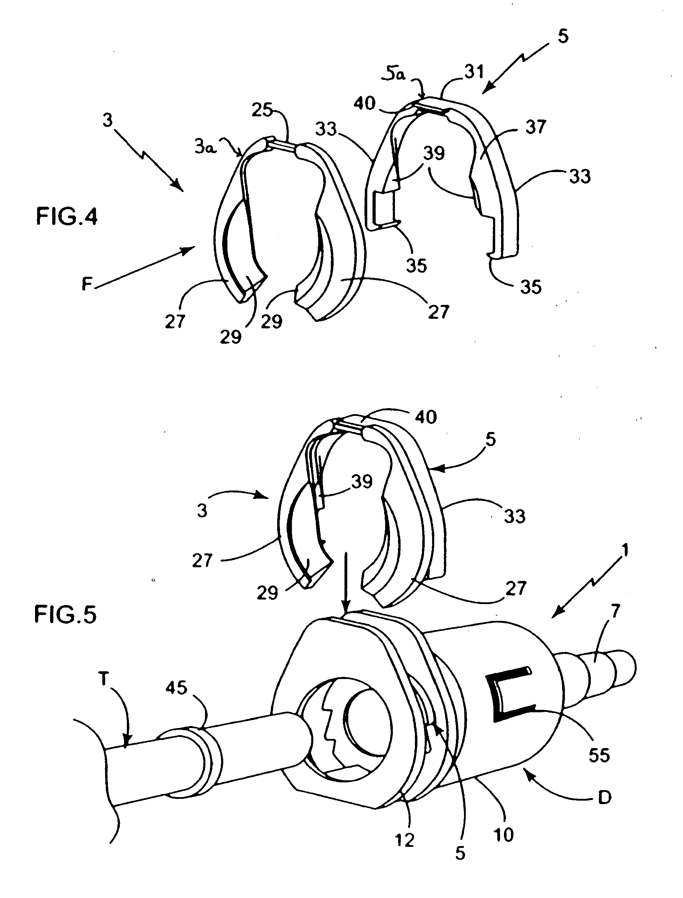

L'organe de verrouillage 3 (figure 4) se présente sous la forme d'une épingle ou cavalier 3a avec une tête 25 et deux pattes arquées élastiquement déformables 27 se faisant face l'une à l'autre. Sur sa face avant, en considérant la direction d'engagement de l'embout T dans la douille D, chaque patte élastiquement déformable 27 de l'organe de verrouillage 3 présente une réduction d'épaisseur ou échancrure formant une première surface d'appui inclinée 29.

Le dispositif témoin 5 (figure 4) se présente également sous la forme d'une épingle ou cavalier 5a avec une tête 31 et deux pattes arquées élastiquement déformables 33 en regard l'une de l'autre et qui se terminent chacune par un crochet interne de fixation 35. Dans sa partie centrale, chaque patte 33 présente un bossage interne 37 avec une réduction d'épaisseur ou échancrure formant une seconde surface d'appui inclinée 39.

L'organe de verrouillage 3 et le dispositif témoin 5 sont accolés l'un à l'autre (figure 5) et pré-montés autour du pontet 17 qui relie les parties centrale 10 et d'extrémité 12 de la douille D. Les deux pattes 27 de l'organe de verrouillage 3 s'engagent librement dans les deux ouvertures 15 de la douille D, alors que les deux crochets de fixation 35 des pattes 33 du dispositif témoin 5 sont mis en prise et sous tension avec les deux crans d'arrêt inférieurs 21 a de la douille D. Pour faciliter le positionnement relatif entre l'organe de verrouillage 3 et le dispositif témoin 5, la tête 31 du dispositif témoin 5 peut présenter un surplomb 40 en saillie à sa face avant F1 et qui vient surmonter la tête 25 de l'organe de verrouillage 3, ou inversement. Le raccord encliquetable 1 prend alors l'état illustré aux figures 1 et 2 avant la connexion de l'embout T, c'est-à-dire que l'organe de verrouillage 3 et le dispositif témoin 5 sont accolés l'un à l'autre sans être décalés l'un par rapport à l'autre ou sans faire saillie hors de la douille D. Autrement dit, le dispositif témoin 5 est intégré dans la douille D sans être particulièrement visible et est dans une position basse.

Vers son extrémité libre, l'embout T présente une saillie périphérique 45 qui, lors de l'introduction de l'embout T dans la douille D, va tout d'abord prendre appui sur les premières surfaces inclinées 29 des pattes 27 de l'organe de verrouillage 3, puis sur les secondes surfaces inclinées 39 des pattes 33 du dispositif témoin 5 pour le faire normalement passer dans une seconde position ou position haute où il est décalé ou en saillie par rapport à l'organe de verrouillage 3 marquant ainsi de façon visuelle une bonne connexion de l'embout T sur la douille D, comme cela va être explicité ci-après en référence aux figures 5 et 7.

Comme cela est illustré à la figure 1, le conduit C a été raccordé à une extrémité de la douille D, et l'embout T est engagé dans l'autre extrémité de la douille D. La saillie périphérique 45 de l'embout T vient tout d'abord en contact avec les premières surfaces d'appui 29 des pattes 27 de l'organe de verrouillage 3, les deux pattes 27 vont s'écarter l'une de l'autre et sortir des ouvertures 15 de la douille D pour permettre le passage de l'embout T. Ensuite, la saillie périphérique 45 de l'embout T n'étant plus en contact avec les premières surfaces d'appui 29 des pattes 27 de l'organe de verrouillage 3, cela provoque un rappel élastique des pattes 27 dans leurs positions initiales. Puis, la saillie périphérique 45 de l'embout T vient en contact avec les secondes parois d'appui 39 des pattes 33 du dispositif témoin 5, ce qui a pour effet de provoquer un déplacement des deux crochets de fixation 35 des pattes 33 qui vont lâcher prise avec les crans inférieurs 21 a de la douille D et entraîner un déplacement du dispositif témoin 5 dans son plan ou dans un plan perpendiculaire à l'axe longitudinal de la douille D jusqu'à ce que les deux crochets 35 viennent naturellement s'ancrer dans les deux crochets intermédiaires de fixation 21 b de la douille D. Le dispositif témoin 5 est alors dans une position haute par rapport à la douille D et devient visible. La saillie périphérique 45 de l'embout T vient enfin en appui contre un épaulement radialement interne 47 de la douille D, et l'embout T est ainsi connecté à la douille D puisque sa saillie périphérique 45 est retenue entre l'organe de verrouillage 3 et l'épaulement 47 de la douille D. L'opérateur qui a effectué le montage peut donc constater visuellement que la connexion est bien assurée. Eventuellement, l'opérateur peut ensuite ramener le dispositif témoin 5 dans sa position basse en exerçant simplement une pression sur sa tête 31 pour ramener les crochets 35 de ses pattes 33 en contact avec les crans inférieurs 21 a de la douille D.

Bien entendu, le raccord encliquetable 1 comprend également des moyens pour assurer l'étanchéité entre l'embout T et le conduit C. Ces moyens d'étanchéité peuvent être constitués par une garniture 50 en forme de bague qui est par exemple surmoulée à une extrémité d'un manchon de liaison 52 rapporté par encliquetage à l'intérieur de deux orifices 55 diamétralement opposés percés dans la partie centrale 10 de la douille D comme cela est décrit dans le document FR-2 795 156 précité.

## Revendications

1. Raccord encliquetable comprenant un corps en forme de douille (D) monté fixement via un dispositif de retenue sur une extrémité d'un conduit (C) à raccorder sur un embout tubulaire rigide (T) qui est destiné à être introduit dans la douille (D) et qui comporte une saillie périphérique (45) au voisinage de son extrémité libre, un organe de verrouillage (3) destiné à coopérer avec la saillie périphérique (45) de l'embout (T) pour retenir ce dernier dans la douille (D), et un dispositif témoin visuel (5) pour marquer la bonne connexion de l'embout (T) dans la douille (D), le dispositif témoin (5) est supporté par la douille (D), placé derrière l'organe de verrouillage (3) en considérant la direction d'engagement de l'embout (T) dans la douille (D), et destiné à coopérer avec la saillie périphérique (45) de l'embout (T) pour passer d'une première position ou position basse en ne faisant pas saillie hors de la douille (D) à une seconde position ou position haute en faisant saillie par rapport à la douille (D) pour marquer visuellement une bonne connexion de l'embout (T) dans la douille (D), **caractérisé en ce que** l'organe de verrouillage (3) et le dispositif témoin (5) sont constitués par deux épingles ou cavaliers (3a ; 5a) présentant chacun une tête (25 ; 31) et deux pattes élastiquement déformables (27 ; 33), **en ce que** chaque patte (33) du dispositif témoin (5) présente un crochet de fixation interne (35) à son extrémité libre, et **en ce que** les crochets de fixation (35) des pattes (33) du dispositif témoin (5) coopèrent avec deux crans inférieurs (21 a) ménagés sur la douille (D) lorsque le dispositif témoin (5) est dans sa position basse, et avec deux crans intermédiaires (21 b) ménagés sur la douille (D) lorsque le dispositif témoin (5) est dans sa position haute.

2. Raccord selon la revendication 1, dans lequel le dispositif témoin (5) peut être ramené par un opérateur dans sa position basse après être passé dans sa position haute marquant la bonne connexion de l'embout (T) dans la douille (D).

3. Raccord selon la revendication 1 ou 2, dans lequel chaque patte (33) du dispositif témoin (5) présente sur sa face avant, en considérant la direction d'engagement de l'embout (T) dans la douille (D), une surface d'appui inclinée (39) apte à coopérer avec la saillie périphérique (45) de l'embout (T) pour faire passer le dispositif témoin (5) de sa position basse à sa position haute.

4. Raccord selon l'une des revendications précédentes, dans lequel l'organe de verrouillage (3) et le dispositif témoin (5) sont accolés l'un à l'autre dans la douille (D).

## Claims

1. Snap coupling comprising a body in the form of a sleeve (D) fixedly mounted via a retaining device on an end of a pipe (C) to be connected to a rigid tubular fitting (T) which is designed to be inserted in the sleeve (D) and which comprises a peripheral projection (45) in the vicinity of its free end, a locking element (3) designed to co-operate with the peripheral projection (45) of the fitting (T) in order to retain it in the sleeve (D), and a visual marker device (5) for indicating that the fitting (T) has been correctly connected in the sleeve (D), which marker device (5) is supported by the sleeve (D), positioned behind the locking element (3) by reference to the direction in which the fitting (T) is inserted into the sleeve (D) and designed to co-operate with the peripheral projection (45) of the fitting (T) in order to move from a first position or bottom position not projecting out from the sleeve (D) into a second position or top position projecting out from the sleeve (D) so as to provide a visual marker that the fitting (T) has been correctly connected in the sleeve (D), **characterised in that** the locking element (3) and the marker device (5) comprise two pins or staples (3a; 5a) each having a head (25; 31) and two elastically deformable lugs (27; 33), and each lug (33) of the marker device (5) has an internal fixing hook (35) at its free end, and the fixing hooks (35) of the lugs (33) of the marker device (5) co-operate with two bottom notches (21 a) provided on the sleeve (D) when the marker device (5) is in its bottom position and with two intermediate notches (21 b) provided on the sleeve (D) when the marker device (5) is in its top position.

2. Coupling as claimed in claim 1, in which the marker device (5) can be moved back into its bottom position by an operator after having been moved into its top position indicating that the fitting (T) has been correctly connected in the sleeve (D).

3. Coupling as claimed in claim 1 or 2, in which each lug (33) of the marker device (5) has an inclined support surface (39) on its front face by reference to the direction in which the fitting (T) is inserted into the sleeve (D), designed to co-operate with the peripheral projection (45) of the fitting (T) in order to move the marker device (5) from its bottom position to its top position.

4. Coupling as claimed in one of the preceding claims, in which the locking element (3) and the marker device (5) sit adjoining one another in the sleeve (D).

## Patentansprüche

1. Einrastbarer Verbinder, umfassend einen Körper in Form einer Hülse (D), welche über eine Haltevorrichtung fest angebracht ist an einem Ende einer Leitung (C), zum Anschließen eines starren rohrförmigen Ansatzstücks (T), welches dazu bestimmt ist, in die Hülse (D) eingeführt zu werden und welches in der Nähe seines freien Endes einen Umfangsvorsprung (45) umfasst, ein Verriegelungselement (3), welches dazu bestimmt ist, mit dem Umfangsvorsprung (45) des Ansatzstücks (T) zusammenzuwirken, um das letztere in der Hülse (D) zu halten, und eine visuelle Kontrollvorrichtung (5) zum Markieren der richtigen Verbindung des Ansatzstücks (T) in der Hülse (D), wobei die Kontrollvorrichtung (5) von der Hülse (D) gehalten ist, im Hinblick auf die Eingriffrichtung des Ansatzstücks (T) in der Hülse (D) hinter dem Verriegelungselement (3) positioniert ist und dazu bestimmt ist, mit dem Umfangsvorsprung (45) des Ansatzstücks (T) zusammenzuwirken, um aus einer ersten Position oder tiefen Position, in der sie nicht aus der Hülse (D) hervorsteht, überzugehen in eine zweite Position oder hohe Position, in der sie bezüglich der Hülse (D) hervorsteht, um visuell eine richtige Verbindung des Ansatzstücks (T) in der Hülse (D) zu markieren, **dadurch gekennzeichnet, dass** das Verriegelungselement (3) und die Kontrollvorrichtung (5) gebildet sind durch zwei Spangen oder Klammern (3a; 5a), welche jeweils einen Kopf (25; 31) und zwei elastisch verformbare Laschen (27; 33) aufweisen, dass jede Lasche (33) der Kontrollvorrichtung (5) an ihrem freien Ende einen inneren Befestigungshaken (35) aufweist, und dass die Befestigungshaken (35) der Laschen (33) der Kontrollvorrichtung (5) zusammenwirken mit zwei an der Hülse (D) ausgesparten unteren Rasten (21a), wenn die Kontrollvorrichtung (5) in ihrer tiefen Position ist, und mit zwei an der Hülse (D) ausgesparten Zwischenrasten (21b), wenn die Kontrollvorrichtung (5) in ihrer hohen Position ist.

2. Verbindung nach Anspruch 1, wobei die Kontrollvorrichtung (5) durch einen Benutzer in ihre tiefe Position zurückgeführt werden kann, nachdem sie in ihre hohe Position geführt wurde, welche die richtige Verbindung des Ansatzstücks (T) in der Hülse (D) markiert.

3. Verbindung nach Anspruch 1 oder 2, wobei jede Lasche (33) der Kontrollvorrichtung (5) im Hinblick auf die Eingriffrichtung des Ansatzstücks (T) in der Hülse (D) an ihrer Vorderseite eine geneigte Anschlagfläche (39) aufweist, welche dazu ausgestaltet ist, mit dem Umfangsvorsprung (45) des Ansatzstücks (T) zusammenzuwirken, um die Kontrollvorrichtung (5) aus ihrer tiefen Position in ihre hohe Position übergehen zu lassen.

4. Verbindung nach einem der vorhergehenden Ansprüche, wobei das Verriegelungselement (3) und die Kontrollvorrichtung (5) in der Hülse (D) aneinandergefügt sind.
